# EUROPÄISCHE PATENTSCHRIFT

(11) **EP 2 444 744 B1**
(45) Veröffentlichungstag und Bekanntmachung des Hinweises auf die Patenterteilung: **05.12.2012**
(21) Anmeldenummer: 10013911.2
(22) Anmeldetag: 23.10.2010
(51) Int. Cl.: F24D 3/12, F24D 19/02, F24H 9/12

(54) **Baugruppe zum Aufbau eines Heizkörpers**
Module for assembling a heater
Module destiné au montage d'un radiateur

(43) Veröffentlichungstag der Anmeldung: 25.04.2012
(73) Patentinhaber: Zehnder Verkaufs- und Verwaltungs AG, 5722 Gränichen (CH)
(72) Erfinder: Diethelm, Roland, 8400 Winterthur (CH)
(74) Vertreter: Stenger, Watzke & Ring

(56) Entgegenhaltungen:
- WO-A1-98/09127
- WO-A1-2004/038121
- WO-A1-2006/070950
- DE-U1- 29 818 247
- FR-A1- 2 653 535

## Beschreibung

Die Erfindung betrifft eine Baugruppe zum Aufbau eines Heizkörpers, mit den Merkmalen des Oberbegriffs des Anspruchs 1. Die Erfindung betrifft ferner einen baugruppengemäßen Heizkörper.

Das Dokument WO 2006/070950 offenbart den Oberbegriff des Anspruchs 1.

Heizkörper an sich sind aus dem Stand der Technik wohl bekannt, weshalb es eines gesonderten druckschriftlichen Nachweises an dieser Stelle nicht bedarf. Es sind aus dem Stand der Technik ferner unterschiedliche Heizkörperbauformen bekannt geworden, so zum Beispiel Gliederheizkörper, Plattenheizkörper, Flachrohrheizkörper, Rippenrohr-Heizkörper und/oder dergleichen.

Den vorgenannten Heizkörperbauformen ist gemein, dass sie über ein Rohrleitungssystem verfügen, beispielsweise in der Ausgestaltung als Rohrregister, das der Hindurchführung eines Heizmediums dient. Als Heizmedium kommt beispielsweise Wasser in Betracht.

Das Rohrleitungssystem des Heizkörpers stellt einen ersten Heizkörperanschluss sowie einen zweiten Heizkörperanschluss zur Verfügung. Dabei dienen die Heizkörperanschlüsse dem Anschluss des Heizkörpers an ein System zur Versorgung des Heizkörpers mit dem Heizmedium. Über den ersten Heizköperanschluss kann dabei der Zulauf des Heizmediums erfolgen, wohingegen der zweite Heizkörperanschluss der Abführung des Heizmediums dient.

Das System zur Versorgung eines Heizkörpers mit einem Heizmedium ist in der Regel bauseits vorgegeben. Der Heizkörper ist deshalb hinsichtlich seiner Heizkörperanschlüsse entsprechend auszubilden, damit am Einbauort ein bestimmungsgemäßer Anschluss des Heizkörpers an entsprechende Zuführund/oder Abführleitungen des Heizmedium-Systems erfolgen kann. In diesem Zusammenhang kommt es immer wieder zu Kompatibilitätsproblemen, was als nachteilig empfunden wird.

Es ist deshalb die Aufgabe der Erfindung, eine Baugruppe zum Aufbau eines Heizkörpers sowie einen baugruppengemäß aufgebauten Heizkörper vorzuschlagen, die bzw. der eine vereinfachte Handhabung insbesondere während einer Montage am Einbauort ermöglicht.

Zur Lösung dieser Aufgabe wird mit der Erfindung eine Baugruppe zum Aufbau eines Heizkörpers der eingangsgenannten Art vorgeschlagen, mit den Merkmalen des Anspruchs 1.

Mit der erfindungsgemäßen Baugruppe wird eine Anschlussbaugruppe vorgeschlagen, die dazu dient, das Rohrregister des Heizkörpers strömungstechnisch an ein Heizmedium-System, das heißt an eine Heizmedium-Zuführleitung und an eine Heizmedium-Abführleitung anzuschließen. Dabei dient die Anschlussbaugruppe der strömungstechnischen Verbindung der rohrregisterseitigen Anschlüsse des Heizkörpers mit dem Heizmedium-System. Erfindungsgemäß sind die rohrregisterseitigen Anschlüsse in einem Ausschnitt des Flächenelements angeordnet, und zwar in der Plattenebene des Flächenelements.

Der besondere Vorteil der erfindungsgemäßen Ausgestaltung ist zum einen in der platzsparenden Ausgestaltung zusehen, sowie zum anderen in der Möglichkeit flexibel auf bauseits vorhandene Heizmedium-Anschlüsse reagieren zu können, was insbesondere die Erstmontage am Einbauort vereinfacht.

Dank der erfindungsgemäßen Ausgestaltung sind die rohrregisterseitigen Anschlüsse zum Anschluss des Heizkörpers an ein Heizmedium-System gut zugänglich am Flächenelement angeordnet. "Gut zuzgänglich" im Sinne der Erfindung meint dabei, dass die Anschlüsse im Unterschied zum Stand der Technik nicht im Bereich einer unteren Randkante des Flächenelements, sondern vielmehr hiervon beabstandet ausgebildet sind. Dabei sind die rohrregisterseitigen Anschlüsse in einem Ausschnitt, das heißt einer Ausnehmung des Flächenelements untergebracht und können deshalb in der von dem Flächenelement ausgebildeten Plattenebene angeordnet sein. Das Flächenelement baut insofern in Dickenrichtung nicht auf.

Über die erfindungsgemäß vorgesehene Anschlussbaugruppe kann nun eine strömungstechnische Verbindung zwischen den rohrregisterseitigen Anschlüssen des Heizkörpers einerseits und den Anschlüssen eines Heizmedium-Systems in einfacher Weise hergestellt werden, wobei die Anschlussbaugruppe hinsichtlich ihres Verlegeweges flexibel ist, womit sie unabhängig von bauseits unter Umständen vorgegebenen Anschlusskonstellationen ist. Die erfindungsgemäße Ausgestaltung gestattet es insofern, einen nach der Baugruppe ausgestalteten Heizkörper dem Grunde nach frei im Raum zu positionieren, zumindest frei mit Bezug auf heizsystemseitige Anschlüsse. Auf diese Weise wird es auch vereinfacht, eine Montage des Heizkörpers, insbesondere eine Erstmontage desselben vorzunehmen.

Gemäß der Erfindung wird vorgeschlagen, dass der Heizkörper Heizkörperanschlüsse zur Verfügung stellt und zwar einen ersten Heizkörperanschluss sowie einen zweiten Heizkörperanschluss. Dabei dienen die Heizkörperanschlüsse dazu, mit den Anschlüssen eines Heizmedium-Systems verbunden zu werden, das heißt eine strömungstechnische Verbindung mit einer Heizmedium-Zuführleitung und einer Heizmedium-Abführleitung auszugestalten. Gemäß dieser besonderen Ausgestaltung der Erfindung dient die erfindungsgemäß vorgesehene Anschlussbaugruppe dazu, die rohrregisterseitigen Anschlüsse des Heizkörpers mit den Heizkörperanschlüssen zu verbinden. Die Anschlussbaugruppe stellt insofern die strömungstechnische Verbindung zwischen den Heizkörperanschlüssen einerseits und den rohrregisterseitigen Anschlüssen andererseits bereit.

Die Heizkörperanschlüsse können vorzugsweise frei positionierbar am Flächenelement angeordnet werden. Die schon vorbeschriebene Flexibilität hinsichtlich der Anschlusskonstellation am Einbauort des Heizkörpers wird so in vorteilhafter Weise gewährleistet. Die strömungstechnische Verbindung zwischen den rohrregisterseitigen Anschlüssen einerseits und den frei am Flächenelement positionierbaren Heizkörperanschlüssen andererseits wird durch die erfindungsgemäß vorgesehene Anschlussbaugruppe erreicht.

Die Anschlussbaugruppe verfügt gemäß einem weiteren Merkmal der Erfindung über eine Schlaucheinrichtung. Mittels dieser Schlaucheinrichtung erfolgt ein Anschluss eines ersten rohrregisterseitigen Anschlusses an einen ersten Heizkörperanschluss. Diese Verbindung dient beispielsweise dazu, ein Heizmedium in das Rohrregister einströmen lassen zu können. Eine zweite strömungstechnische Verbindung wird mittels der Anschlussbaugruppe zwischen einem zweiten rohrregisterseitigen Anschluss und einem zweiten Heizkörperanschluss ausgebildet. Diese strömungstechnische Verbindung dient für die Abteilung eines den Heizkörper bereits durchströmten Heizmediums. Die Heizkörperanschlüsse, das heißt der erste Heizkörperanschluss und der zweite Heizkörperanschluss sind an das bauseits vorgesehene Heizmedium-System anzuschließen, wobei der erste Heizkörperanschluss an eine Heizmedium-Zuführleitung und der zweite Heizkörperanschluss an eine Heizmedium-Abführleitung anzuschließen sind.

In die vorbeschriebene strömungstechnische Verbindung zwischen erstem rohrregisterseitigen Anschluss einerseits und erstem Heizkörperanschluss andererseits kann eine Ventilanordnung zwischengeschaltet sein, die in an sich bekannter Weise zur Temperatursteuerung dient. Da die Heizkörperanschlüsse dem Grunde nach frei positionierbar am Flächenelement angeordnet werden können, ist ein nach der erfindungsgemäßen Baugruppe ausgestalteter Heizkörper flexibel in Bezug auf die Anordnung der bauseits vorgesehenen Anschlüsse für das Heizmedium, da erfindungsgemäß zwischen rohrregisterseitigen Anschlüssen einerseits und Heizkörperanschlüssen andererseits unterschieden wird, wobei die Heizkörperanschlüsse flexibel montierbar sind und über die erfindungsgemäß vorgesehene Anschlussbaugruppe eine strömungstechnische Verbindung zu den rohrregisterseitigen Anschlüssen ermöglicht ist. In vorteilhafter Weise muss damit nicht die bauseits vorgesehene Anschlusskonstellation bei der Erstellung des Heizkörpers mitberücksichtigt werden. Es ist vielmehr in vorteilhafter Weise möglich, einen standardisiert ausgestalteten Heizkörper bereitzustellen, der hinsichtlich seiner Anschlussindividualität auf die am jeweiligen Einbauort vorherrschende Anschlusskonstellation eingestellt werden kann. Damit erweist sich die erfindungsgemäße Ausgestaltung als gegenüber den aus dem Stand der Technik bekannten Heizkörperbauformen sehr viel flexibler und insbesondere montagefreudiger.

Gemäß einem weiteren Merkmal der Erfindung wird das Flächenelement von einem Rahmen getragen. Dieser Rahmen kann frontseitig des späteren Heizkörpers eine Verkleidung, beispielsweise in Form eines Bleches tragen. Der Rahmen dient im Übrigen dazu, die Heizkörperanschlüsse positionsverschieblich aufzunehmen, zu welchem Zweck entsprechend ausgestaltete Halter zum Einsatz kommen können. Diese Halter dienen der Anordnung der Heizkörperanschlüsse am Rahmen, wobei die Anordnung der Halter am Rahmen unter Verwendung von lösbaren Befestigungsmitteln erfolgt, so dass eine nachträgliche Einstellung, das heißt Positionsverschiebung der Halter und damit auch der von den Haltern getragenen Heizkörperanschlüssen relativ gegenüber dem Rahmen ermöglicht ist.

Gemäß einem weiteren Merkmal der Erfindung ist eine Mehrzahl von Flächenelementen vorgesehen. Diese sind in Dickenrichtung des Heizkörpers hintereinander angeordnet. Durch die Verwendung einer Mehrzahl von Flächenelementen kann die Heizleistung des Heizkörpers gesteigert werden. Dabei sind die von den einzelnen Flächenelementen bereitgestellten Rohrregister über die erfindungsgemäß vorgesehene Anschlussbaugruppe gemeinsam an ein und dieselben Heizkörperanschlüsse strömungstechnisch angekoppelt. Die erfindungsgemäße Ausgestaltung erweist sich insofern auch deshalb als vorteilhaft, weil die Möglichkeit gegeben ist, zur Erhöhung der Heizleistung des Heizkörpers eine Mehrzahl von Flächenelementen nach dem Baukastenprinzip miteinander kombinieren zu können.

Weitere Merkmale und Vorteile der Erfindung ergeben sich aus der nachfolgenden Beschreibung anhand der Figuren. Dabei zeigen:
- Figur 1: in schematischer Frontansicht einen nach der erfindungsgemäßen Baugruppe ausgestalteten Heizkörper;
- Figur 2: in einer schematischen Rückansicht den Heizkörper nach Figur 1;
- Figur 3: in einer geschnittenen Seitenansicht ausschnittsweise den Heizkörper nach den Figuren 1 und 2 und
- Figur 4: die Darstellung nach Figur 3 gemäß einer zweiten Ausführungsform.

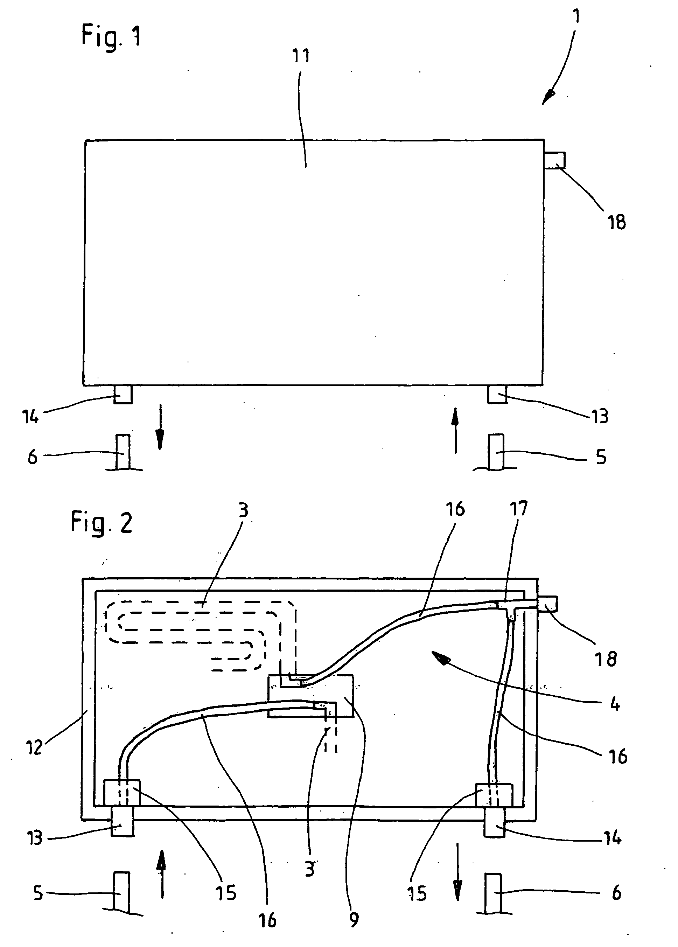

Figur 1 lässt in einer frontseitigen Ansicht einen Heizkörper 1 erkennen, der auf Basis einer erfindungsgemäßen Baugruppe ausgestaltet ist.

Der Heizkörper 1 verfügt frontseitig über eine Verblendung 11, im gezeigten Ausführungsbeispiel in der Ausgestaltung einer Frontblende.

Zum Zwecke der Temperaturregulierung verfügt der Heizkörper 1 desweiteren über eine Ventileinrichtung 18, von welcher in den Figuren ein benutzerseitig zu betätigender Drehknauf zu erkennen ist.

Der Heizkörper 1 verfügt über Heizkörperanschlüsse 13 und 14, wobei der erste Heizkörperanschluss 13 dem Anschluss an eine Heizmedium-Zuführungsleitung 5 und der zweite Heizkörperanschluss 14 dem Anschluss an eine Heizmedium-Abführungsleitung 6 dient. Im bestimmungsgemäßen Verwendungsfall strömt das Heizmedium in Entsprechung der in den Figuren 1 und 2 eingezeichneten Pfeile über die Heizmedium-Zuführungsleitung 5 in den Heizkörper 1 ein und verlässt diesen wieder über die Heizmedium-Abführungsleitung 6.

Figur 2 lässt den erfindungsgemäßen Heizkörper 1 aus einer rückwärtigen Ansicht erkennen.

Wie der Darstellung nach Figur 2 zu entnehmen ist, verfügt der Heizkörper 1 über ein Flächenelement 2. In dieses Flächenelement 2 ist ein Rohrregister 3 eingebettet, welches Rohrregister 3 gemäß der Darstellung nach Figur 2 nur schematisch und ansatzweise gezeigt ist. Bei dem Flächenelement 2 kann es sich beispielsweise um ein plattenförmiges Element handeln, das aus Grafitschaum gebildet ist.

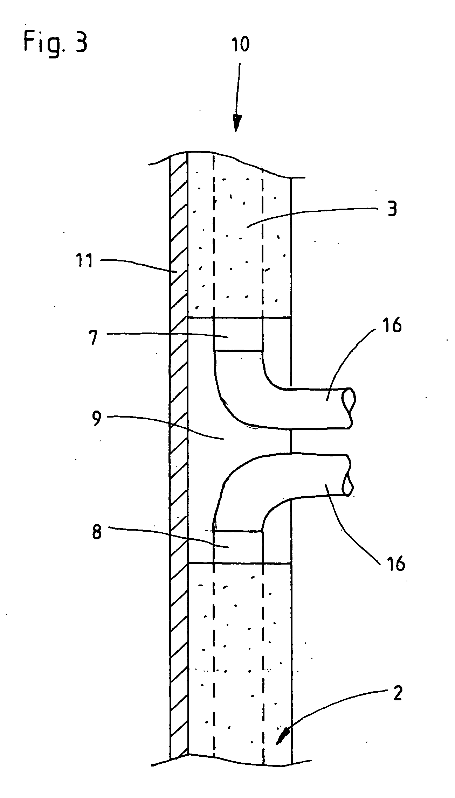

Das Rohrregister 3 verfügt über zwei Leitungsenden, nämlich einem ersten Rohrregisteranschluss 7 und einem zweiten Rohrregisteranschluss 8, wie sich insbesondere aus der Ausschnittdarstellung nach Figur 3 ergibt.

Die beiden Rohrregisteranschlüsse 7 und 8 münden in eine als Ausschnitt 9 zu bezeichnenden Ausnehmung im Flächenelement 2. Dieser Sachzusammenhang ergibt sich im Besonderen aus einer Zusammenschau der Figuren 2 und 3.

Wie insbesondere die Schnittdarstellung nach Figur 3 erkennen lässt, liegen die Rohrregisteranschlüsse 7 und 8 mit Bezug auf die Dickenrichtung 21 des Heizkörpers 1 in der durch das Flächenelement 2 aufgespannten Plattenebene 10.

Das Flächenelement 2 und so auch die Verkleidung 11 sind von einem Rahmen 12 getragen. An diesem Rahmen 12 sind ferner der erste Heizkörperanschluss 13 und der zweite Heizkörperanschluss 14 angeordnet, und zwar unter Zwischenordnung eines jeweiligen Halters 15.

Die Halter 15 und damit auch die von diesen getragenen Heizkörperanschlüsse 13 und 14 sind frei positionierbar am Rahmen 12 angeordnet. Die Darstellung nach Figur 2 lässt eine Ausführungsform erkennen, der gemäß der erste Heizkörperanschluss 13 mit Bezug auf die Zeichnungsebene nach Figur 2 linksseitig am Heizkörper 1 und der zweite Heizkörperanschluss 14 rechtsseitig am Heizkörper 1 angeordnet ist. Dank der frei positionierbaren Anordnung der Halter 15 am Rahmen 12 ist auch eine andere Anordnungskonstellation in einfacher Weise realisierbar. So lassen sich die Halter 15 insbesondere auch direkt nebeneinander anordnen und/oder an einem anderen Rahmenteil des Rahmens 12. Auf diese Weise ist es möglich, die Heizkörperanschlüsse 13 und 14 frei am Rahmen 12 und damit auch frei relativ gegenüber dem Flächenelement 2 am Rahmen 12 zu positionieren, was es gestattet, die vom Heizkörper 1 bereitgestellten Heizkörperanschlüsse 13 und 14 flexibel auf die Einbausituation vor Ort, das heißt die dort gegebene

Anschlusskonstellation hinsichtlich der Heizmedium-Zuführungsleitung 5 bzw. der Heizmedium-Abführungsleitung 6 anpassen zu können.

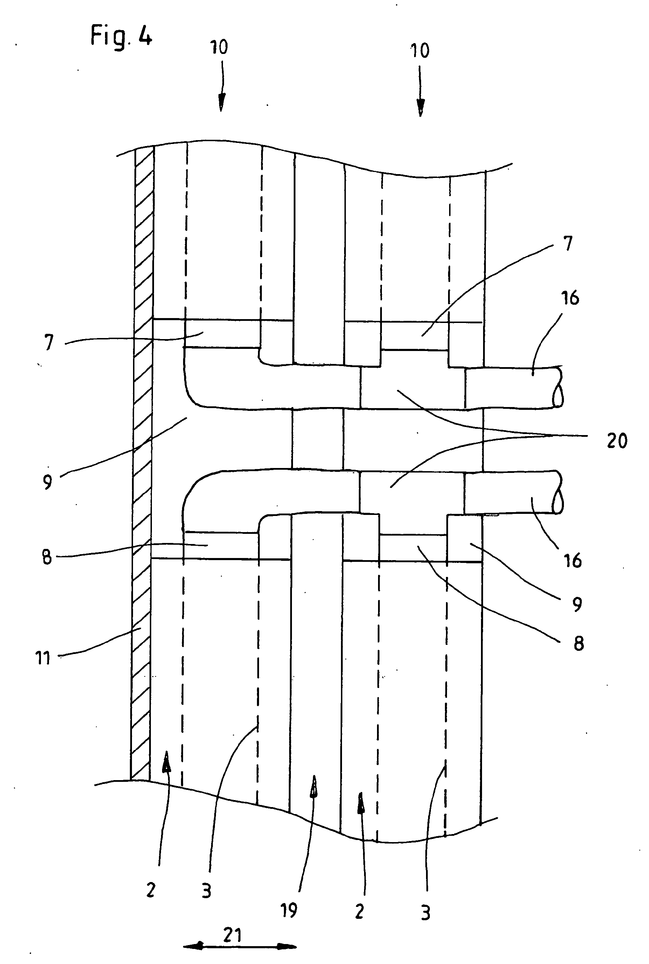

Für den Anschluss der Rohrregisteranschlüsse 7 und 8 an die Heizkörperanschlüsse 13 und 14 dient eine Anschlussbaugruppe 4, die Schläuche 16 sowie gegebenenfalls entsprechende Verteiler 17 und 20 (vgl. Figur 4) umfasst. Die die Schläuche 16 umfassende Schlauchanordnung der Anschlussbaugruppe 4 ist flexibel ausgestaltet, womit dem Umstand Rechnung getragen ist, dass die Heizkörperanschlüsse 13 und 14 frei positionierbar am Rahmen 12 anordbar ausgestaltet sind.

Eine zweite Ausführungsform ist in Figur 4 gezeigt. Gemäß dieser Ausführungsform verfügt der Heizkörper 1 über zwei Flächenelemente 2, die unter Belassung eines Spalts 19 in Dickenrichtung 21 hintereinander angeordnet sind. Die beiden von den Flächenelementen 2 bereitgestellten Rohrregister 3 sind an ein und dieselbe Anschlussbaugruppe 4 und damit auch an ein und dieselben Heizkörperanschlüsse 13 und 14 angeschlossen. Die strömungstechnische Verbindung der Rohrregister 3 erfolgt in einfacher Weise über die Schläuche 16 der Schlauchanordnung der Anschlussbaugruppe 4, wobei für den Anschluss der Schläuche an die jeweiligen Rohrregisteranschlüsse 7 und 8 Verteiler zum Einsatz kommen können, beispielsweise T-förmig ausgestaltete Verteiler 20, wie diese bei dem mit Bezug auf die Zeichnungsebene nach Figur 4 rechten Flächenelement 2 zum Einsatz kommen.

Es versteht sich im Übrigen, dass die Anschlussbaugruppe 4 über weitere Verteiler in Form auch andersartig ausgebildete Verteiler verfügen kann. Von erfindungswesentlicher Bedeutung ist, dass zwischen Rohrregisteranschlüssen einerseits und Heizkörperanschlüssen andererseits unterschieden ist. Die Rohrregisteranschlüsse sind in Plattenebene in einer Ausnehmung des Flächenelementes angeordnet und insofern gut und frei zugänglich. Die Heizkörperanschlüsse sind hingegen frei positionierbar am Flächenelement 2, im gezeigten Ausführungsbeispiel am Rahmen 12 angeordnet. Die strömungstechnische Verbindung zwischen den Rohrregisteranschlüssen 7 und 8 und den Heizkörperanschlüssen 13 und 14 erfolgt durch die Anschlussbaugruppe 4. Diese Form der Anschlussausgestaltung gestattet es, den Heizkörper 1 hinsichtlich seiner Heizkörperanschlüsse flexibel und frei an die Einbausituation vor Ort anpassen zu können.

### Bezugszeichen:

- 1: Heizkörper
- 2: Flächenelement
- 3: Rohrregister
- 4: Anschlussbaugruppe
- 5: Heizmedium-Zuführungsleitung
- 6: Heizmedium-Abführungsleitung
- 7: erster Rohrregisteranschluss
- 8: zweiter Rohrregisteranschluss
- 9: Ausschnitt
- 10: Plattenebene
- 11: Verkleidung
- 12: Rahmen
- 13: erster Heizkörperanschluss
- 14: zweiter Heizkörperanschluss
- 15: Halter
- 16: Schlauch
- 17: Verteiler
- 18: Ventileinrichtung
- 19: Spalt
- 20: Verteiler
- 21: Dickenrichtung

## Patentansprüche

1. Baugruppe zum Aufbau eines Heizkörpers (1), mit einem plattenförmigen Flächenelement (2) aus einem temperaturleitenden Material und einem Rohrregister (3) zur Führung eines Heizmediums, wobei das Rohrregister (3) in dem Flächenelement (2) eingebettet ist, mit einer Anschlussbaugruppe (4) für den Anschluss des Rohrregisters (3) an eine Heizmedium-Zuführleitung (5) und eine Heizmedium-Abführleitung (6), wobei die rohrregisterseitigen Anschlüsse (7, 8) zum Anschluss des Rohrregisters (3) an die Anschlussbaugruppe (4) in Plattenebene (10) angeordnet sind, wobei die Anschlussbaugruppe (4) Heizkörperanschlüsse (13, 14) bereitstellt, durch einen Rahmen (12), der das Flächenelement trägt, wobei die rohrregisterseitigen Anschlüsse (7,8) in einem Ausschnitt (9) des Flächenelements (2) angeordnet sind, wobei die Heizkörperanschlüsse am Rahmen (12) mittels eines jeweiligen Halters (15) angeordnet sind.

2. Baugruppe nach Anspruch 1, **dadurch gekennzeichnet, dass** der Rahmen (12) heizkörperfrontseitig eine Verkleidung (11) trägt.

3. Baugruppe nach Anspruch 1 oder 2, **dadurch gekennzeichnet, dass** eine Mehrzahl von Flächenelementen (2) vorgesehen ist, welche Flächenelemente (2) in Dickenrichtung (21) hintereinander angeordnet sind.

4. Baugruppe nach Anspruch 1, **dadurch gekennzeichnet, dass** die Halter (15) positionsverschieblich am Rahmen (12) angeordnet sind.

5. Baugruppe nach Anspruch 1, **dadurch gekennzeichnet, dass** die Heizkörperanschlüsse (13, 14) und die Rohrregisteranschlüsse (7, 8) strömungstechnisch mittels einer Schlaucheinrichtung (16) miteinander verbunden sind.

6. Heizkörper hergestellt aus einer Baugruppe nach einem der vorhergehenden Ansprüche 1 bis 5.

## Claims

1. A module for assembling a heater (1) comprising a plate-shaped surface element (2) made of a thermally conductive material and a pipe register (3) for guiding a heating medium, wherein the pipe register (3) is embedded in the surface element (2), comprising a connection module (4) for connecting the pipe register (3) to a heating medium supply pipe (5) and a heating medium outlet pipe (6), wherein the connections on the side of the pipe register (7, 8) for connecting the pipe register (3) to the connection module (4) are located in the plate plane (10), wherein the connection module (4) provides heater connections (13, 14), **characterized by** a frame (12) which carries the surface element, wherein the pipe register connections (7, 8) are placed in a cutout (9) of the surface element (2), wherein the heater connections are placed on the frame (12) by means of respective supports (15).

2. A module according to claim 1, **characterized in that** the frame (12) carries a paneling (11) on the front side of the heater.

3. A module according to claim 1 or 2, **characterized in that** a plurality of surface elements (2) is provided, which surface elements (2) are placed one behind the other in the direction of thickness (21).

4. A module according to claim 1, **characterized in that** the supports (15) are placed on the frame (12) such that their positions can be changed.

5. A module according to claim 1, **characterized in that** the heater connections (13, 14) and the pipe register connections (7, 8) are connected to each other in a fluidic manner by means of a hose device (16).

6. A heater made of a module according to one of the preceding claims 1 through 5.

## Revendications

1. Module destiné au montage d'un radiateur (1) avec un élément plan en forme de plaque (2) en un matériau qui conduit la température et avec un registre tubulaire (3) pour guider un milieu de chauffage, le registre tubulaire (3) étant encastré dans l'élément plan (2), avec un module de branchement (4) pour le branchement du registre tubulaire (3) à une conduite d'alimentation en milieu de chauffage (5) et une conduite d'évacuation du milieu de chauffage (6), les branchements du côté du registre tubulaire (7, 8) pour le branchement du registre tubulaire (3) au module de branchement (4) étant placés dans le plan des plaques (10), le module de branchement (4) mettant à disposition des branchements de radiateur (13, 14), **caractérisé par** un cadre (12) qui porte l'élément plan, les branchements du côté du registre tubulaire (7, 8) étant placés dans une découpe (9) de l'élément plan (2), les branchements de radiateur (13, 14) étant placés sur le cadre (12) au moyen d'un support respectif (15).

2. Module selon la revendication 1, **caractérisé en ce que** le cadre (12) porte un habillage (11) sur le côté du devant du radiateur.

3. Module selon la revendication 1 ou 2, **caractérisé en ce qu'**il est prévu une multitude d'éléments en surface (2), lesquels éléments en surface (2) étant placés l'un derrière l'autre dans le sens de l'épaisseur (21).

4. Module selon la revendication 1, **caractérisé en ce que** les supports (15) sont placés sur le cadre (12) en étant déplaçables en position.

5. Module selon la revendication 1, **caractérisé en ce que** les branchements de radiateur (13, 14) et les branchements du côté du registre tubulaire (7, 8) sont reliés l'un à l'autre pour ce qui est de la technique des fluides au moyen d'un dispositif de tuyaux flexibles (16).

6. Radiateur fabriqué à partir d'un module selon l'une des revendications précédentes 1 à 5.
